# EUROPEAN PATENT SPECIFICATION

(11) **EP 1 612 717 B1**
(45) Date of publication and mention of the grant of the patent: **02.09.2009**
(21) Application number: 05252045.9
(22) Date of filing: 31.03.2005
(51) Int. Cl.: G06K 9/00, G06K 9/62

(54) **Biometric authentication system and registration method**
Biometrisches Authentizierungssystem und Registrierverfahren
Système et procédé d'enregistration d'authentification par mesure biométrique

(30) Priority: 28.06.2004 JP 2004190437; 08.10.2004 JP 2004296976
(43) Date of publication of application: 04.01.2006
(73) Proprietor: FUJITSU LIMITED, Kawasaki-shi, Kanagawa 211-8588 (JP); Fujitsu Frontech Limited, Inagi-shi, Tokyo 206-8555 (JP)
(72) Inventor: Kamata, Hideo, Inagi-shi Tokyo 206-8555 (JP); Kishino, Takumi, Inagi-shi Tokyo 206-8555 (JP); Eguchi, Shinichi, Inagi-shi Tokyo 206-8555 (JP)
(74) Representative: Stebbing, Timothy Charles

(56) References cited:
- WO-A-20/04021884
- US-A1- 2002 048 014
- JAIN A ET AL.: "Biometric Template Selection: A Case Study in Fingerprints" PROC. 4TH INT. CONF. AUDIO AND VIDEO-BASED PERSON AUTHENTICATION, 9 June 2003 (2003-06-09), - 11 June 2003 (2003-06-11) pages 335-342, XP007902580 Guildford, UK

## Description

This invention relates to a registration method for a biometric authentication system, a biometric authentication system, and a program for same, which use the characteristics of a portion of the human body to perform individual authentication, and in particular relates to a registration method for a biometric authentication system, a biometric authentication system, and a program for same, which detect the characteristics of a palm of a hand by non-contact means to acquire biometric information.

There are numerous portions of the human body, such as fingerprints and toe-prints, the retinas of the eyes, facial features, and blood vessels, which enable discrimination of individuals. With advances in biometrics in recent years, various devices have been proposed for authentication of individuals by identifying biometric features of such portions of the human body.

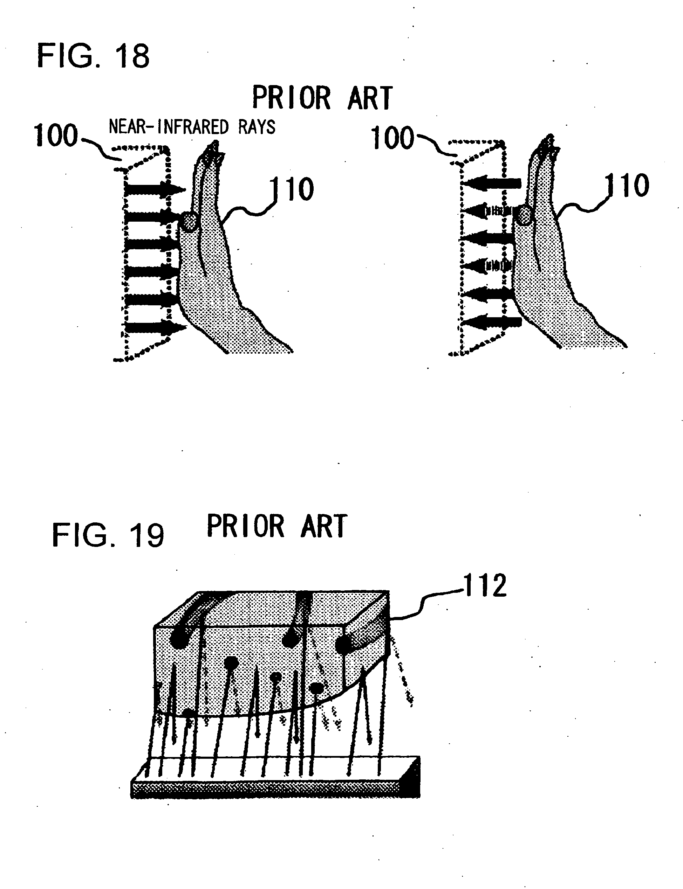

For example, blood vessels of the palm and fingers, and palm-prints and fingerprints, provide a comparatively large amount of individual characteristic data, and so are suitable for reliably verifying an individual (authentication). In particular, blood vessel (vein) patterns remain unchanged throughout life from infancy, and are regarded as being completely unique, and so are well-suited to individual authentication. Fig. 18 to Fig. 21 explain conventional palm authentication techniques. As shown in Fig. 18, at the time of registration or authentication, a user brings the palm of his hand 110 into proximity with an image capture device 100. The image capture device 100 emits near-infrared rays, which are incident on the palm of the hand 110. The image capture device 100 uses a sensor to capture near-infrared rays rebounding from the palm of the hand 110.

As shown in Fig. 19, hemoglobin in the red corpuscles flowing in the veins 112 has lost oxygen. This hemoglobin (reduced hemoglobin) absorbs near-infrared rays at wavelengths near 760 nanometers. Consequently when near-infrared rays are made incident on the palm of a hand, reflection is reduced only in the areas in which there are veins, and the intensity of the reflected near-infrared rays can be used to identify the positions of veins.

To begin with, the user first uses the image capture device 100 of Fig. 18 to register vein image data of the palm of his own hand in a server or on a card. Then, to subsequently identify (authenticate) himself, the user employs the image capture device 100 of Fig. 18 to read the vein image data of his own hand.

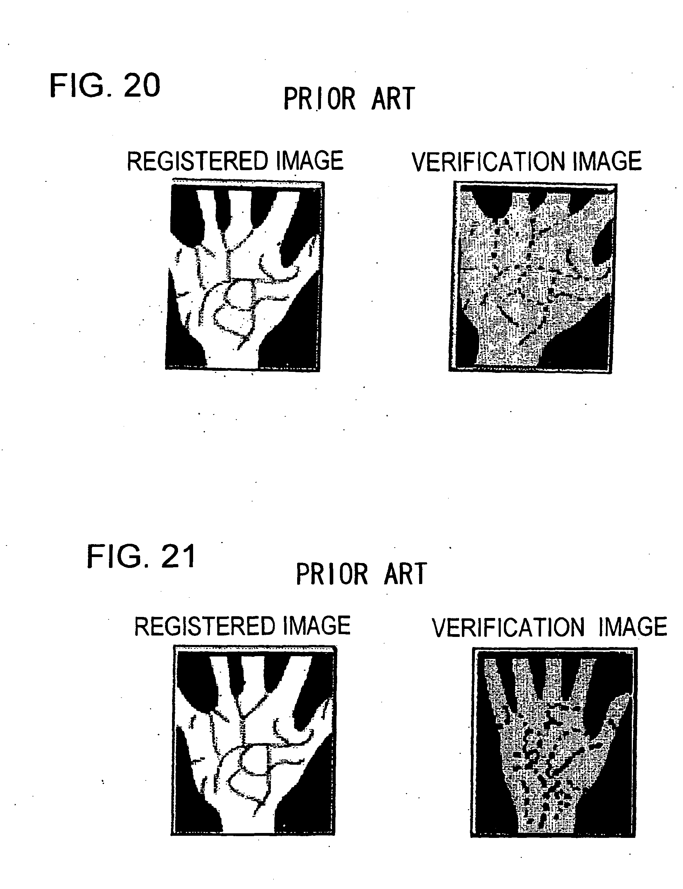

The user is authenticated by comparing the patterns of veins in the registered vein image retrieved using the user's ID and in the vein verification image thus read. For example, on comparing the vein patterns in the registered image and a verification image as in Fig. 20, the user is authenticated as being the individual in question. On the other hand, upon comparison of the vein patterns in a registered image and in a verification image as in Fig. 21, the individual is not authenticated (see for example Japanese Patent Laid-open No. 2004-062826).

In such non-contact detection of biometric information, the body part can be freely moved with respect to the image capture device 100, and in particular the hand can be freely moved. On the other hand, in order to perform accurate detection, the body part for detection 110 must be positioned within the image capture range of the image capture device 100. Methods to achieve this have been proposed in which the position and orientation of the hand is detected from a captured image, and when accurate image capture is not possible, a display or voice output is employed to convey the inappropriateness of the position or orientation of the hand (see for example WO04/021884). In this proposed method, an image of the entire hand is captured and is compared with the average registered hand shape to detect the position and orientation of the hand.

In registration of such biometric information, methods have been proposed in which, when registering fingerprint data, fingerprint data is detected a plurality of times and common characteristic data is extracted from the plurality of sets of fingerprint data, and this common characteristic data is registered (see for example Japanese Patent Laid-open No. 01-263775 and Japanese Patent Laid-open No. 11-232459). Through such methods, the effect on registered data of detection noise and of changes in fingerprint shape due to differences in finger pressure can be prevented.

In such non-contact detection of biometric information, detection is by non-contact means, and moreover the body part, and in particular the hand, can move freely. On the other hand, in order to perform rapid biometric authentication, it is necessary that image capture be performed frequently, and that appropriate images be detected and output to the registration/authentication process. Hence in methods which compare the images of entire hands, time is required to detect the position and orientation of the hand, and moreover the size of the sensor in the image capture device is increased, making such methods unsuitable when rapid detection or small equipment sizes are demanded.

Further, in conventional methods in which common characteristics are extracted and registered, noise due to the biometric detection device and differences in detection states at the time of biometric detection can be excluded. But when registering common data, there is the possibility that an individual biometric characteristic data set of the user obtained for verification will not exactly match his registered data, and that the amount of registered data will differ from (e.g. be less than) the amount of characteristic detection data. Hence, when comparing verification data with registered data at the time of authentication, it may be difficult to perform verification with high accuracy.

Moreover, because the actual data is biometrics data, changes in physical condition must also be taken into account. And when registering common data, if there are differences in physical condition at the time of authentication and at the time of registration, even when the individual is the same, authentication as the same individual may not be possible, so that problems may occur. For example, in authentication using vein patterns, there are numerous factors resulting in fluctuations, among them the pulse rate, the timing of image capture, and the manner in which the hand is presented.

Hence there are impediments to application to equipment in general for use at any time, anywhere, by anyone. But if verification rates are not satisfactory, and problems arise for biometrics reasons, widespread adoption by both users and by equipment manufacturers is impeded.

WO 2004/021884 discloses an individual identification device for blood vessel imaging, the device including instructing means for aiding the user in positioning his hand.

'Biometric Template Selection: A Case Study in Fingerprints', Jain et al, discloses obtaining data sets having similarity.

US 2002/0048014 discloses a system for obtaining a vein pattern of a finger.

It is therefore desirable to provide a registration method for a biometric authentication system, biometric authentication system, and program for same to rapidly extract characteristic data even when using non-contact image capture of a body part (e.g. the palm of the hand).

It is further desirable to provide a registration method for a biometric authentication system, biometric authentication system, and program for same to obtain accurate characteristic data, even when the non-contact image capture device is reduced in size.

It is still further desirable to provide a registration method for a biometric authentication system, biometric authentication system, and program for same to effectively utilize a plurality of sets of characteristic data obtained by image capture by a non-contact image capture device, to improve verification accuracy.

It is still further desirable to provide a registration method for a biometric authentication system, biometric authentication system, and program for same to prevent reductions in verification accuracy, even when there are changes in the image capture device, changes in condition of the body part, and changes in the detection state.

A biometric authentication system, method and program according to the invention are defined in the appended claims.

Furthermore, images of the hand of the same user are obtained a plurality of times from the image capture unit, the mutual degree of similarity among characteristic data sets of a plurality of images of the palm of the hand is judged, and a plurality of characteristic data sets with a high degree of similarity are registered in a storage unit. So even when characteristic data detected a plurality of times is used, verification can be performed which accommodates changes in the biometrics state, without lowering verification accuracy, and moreover inconvenience to the user can be prevented, contributing to the widespread adoption of the biometric authentication system. Because the shape of the hand in images is checked using outlines(of the palm)of the hand in the image, it is possible to rapidly judge whether an image capture has been successful and extract characteristic data, and even using such a method, registration processing can be executed in a short length of time.

Reference is now made, by way of example only, to the accompanying drawings, in which:
Fig. 1 shows the configuration of a biometric authentication system of one embodiment of the invention;
Fig. 2 is an external view of the palm image capture device of Fig. 1;
Fig. 3 is a functional block diagram of the biometric authentication processing of Fig. 1;
Fig. 4 is a functional block diagram of the biometric information registration processing of Fig. 3;
Fig. 5 explains the range of image capture of the palm image capture device of Fig. 2;
Fig. 6 explains the blood vessel image of Fig. 4;
Fig. 7 explains the blood vessel image data of Fig. 6;
Fig. 8 explains data registered in the storage portion in Fig. 3;
Fig. 9 shows the flow of distance/hand outline detection processing in Fig. 3;
Fig. 10 explains hand outline processing in Fig. 9;
Fig. 11 is a first diagram of the flow of registration processing in Fig. 3;
Fig. 12 is a second diagram of the flow of registration processing in Fig. 3;
Fig. 13 explains the comparison of three blood vessel image data sets in Fig. 11;
Fig. 14 explains the comparison of four blood vessel image data sets in Fig. 12;
Fig. 15 is a functional block diagram of trial authentication processing in another embodiment of the invention;
Fig. 16 shows the flow of the trial authentication processing in Fig. 15;
Fig. 17 explains the verification processing of Fig. 15;
Fig. 18 explains a conventional palm image capture device;
Fig. 19 explains the principle of a conventional palm image capture device;
Fig. 20 explains conventional palm image capture technology; and,
Fig. 21 explains conventional palm image capture technology.

Below, embodiments of the invention are explained, in the order of a biometric authentication system, biometric data registration processing method, distance/hand outline detection processing, biometric characteristic data registration processing method, trial authentication and authentication processing, and other embodiments.

### Biometric Authentication System

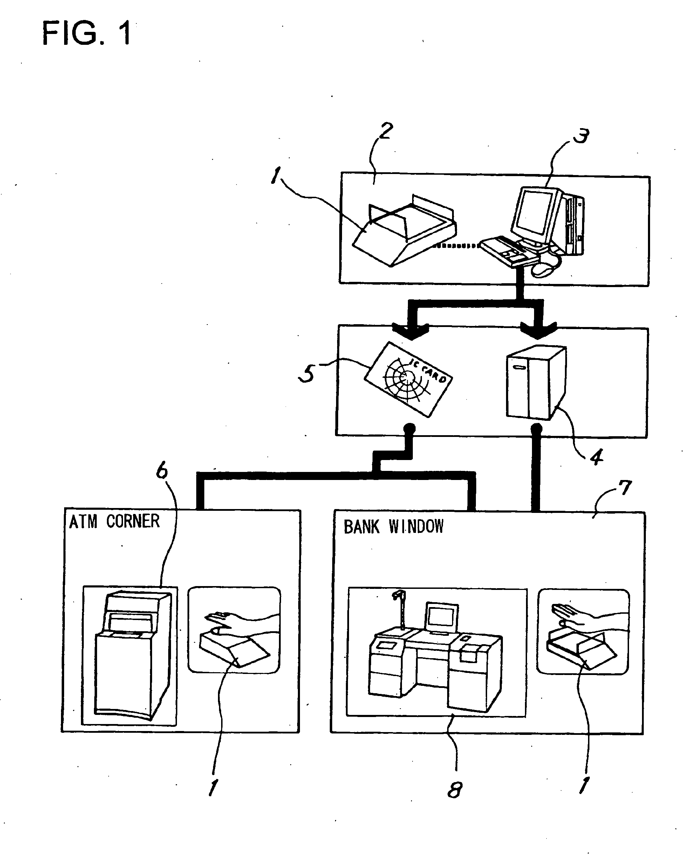

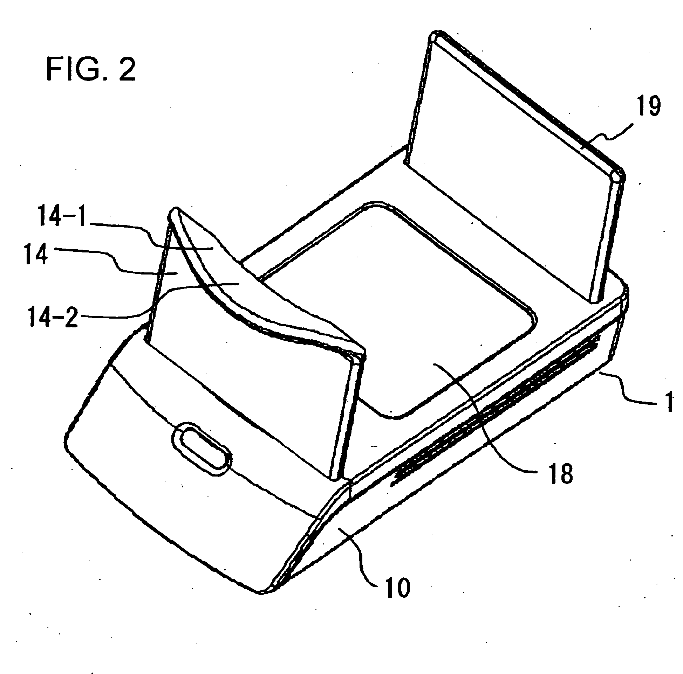

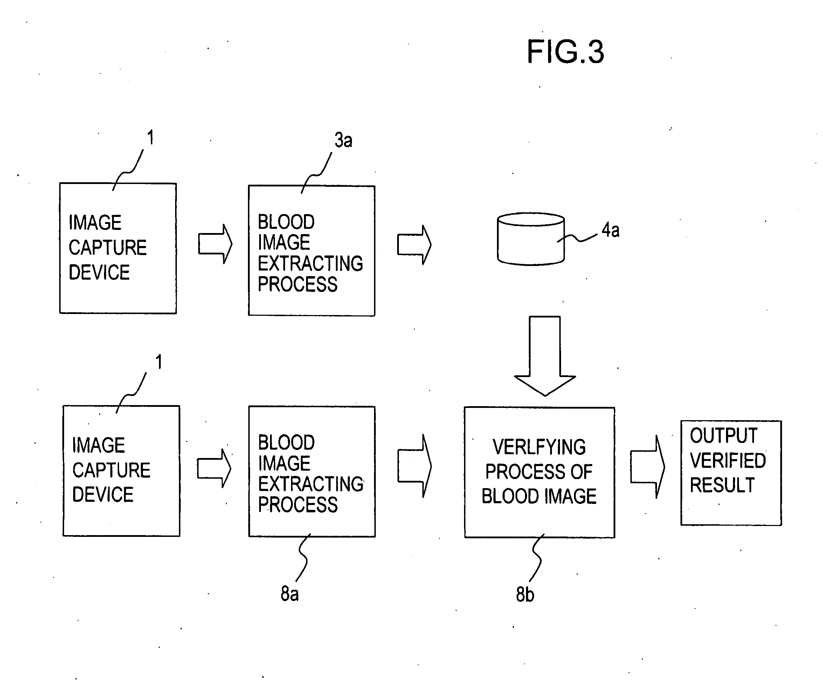

Fig. 1 shows the configuration of a biometric authentication system of one embodiment of the invention; Fig. 2 is an external view of the palm image capture device of Fig. 1; and Fig. 3 explains the biometric authentication processing of Fig. 1.

As a biometric authentication system, Fig. 1 shows an example of a palm vein authentication system in a financial institution. A palm image capture device 1 as explained in Fig. 2, and a branch office terminal (for example, a personal computer) 3 connected to the image capture device 1, are provided in a service area 2 of the financial institution. A user requesting vein pattern authentication places his hand over the palm image capture device (hereafter the "image capture device") 1. As shown in Fig. 3, the image capture device 1 reads the palm, and the blood vessel image extraction processing 3a of the terminal 3 extracts the vein pattern, and registers this as vein data in the terminal 3.

This vein data is recorded in a storage portion 4a of a database server 4 connected to the terminal 3, or in a personal storage (for example, an IC card) 5 carried by the user. The server 4 is connected to a service area terminal 8 in a service area 7 of the financial institution, and the service area terminal 8 is connected to an image capture device 1.

In order to make a withdrawal or perform some other financial transaction in the service area 7 of the financial institution, the user places his hand over the image capture device 1 provided in the service area 7. As shown in Fig. 3, the image capture device 1 reads the palm of the hand, and the vein pattern thereof is extracted through blood vessel image extraction processing 8a by the service area terminal 8. Through verification processing 8b, the service area terminal 8 verifies the vein pattern, as vein data, against the vein data registered in the database server 4 to identify (authenticate)the individual.

The server 4 is connected to an ATM (Automated Teller Machine) 6 of the financial institution, and the ATM 6 can be used to perform transactions through vein pattern authentication. In order for a user to use the ATM 6 to make a withdrawal or perform some other financial transaction, he places his hand over an image capture device 1-1 provided in the ATM 6. The image capture device 1-1 reads the palm. Similarly to.the service area terminal 8, the ATM 6 extracts the vein pattern (blood vessel image), and verifies this pattern, as vein data, against the vein data registered in an IC card 5 carried by the user or in the database server 4, to authenticate the individual.

As shown in Fig. 2, the palm image capture device 1 of Fig. 1 is equipped with a sensor unit 18 substantially in the center of a main unit 10. On a forward portion (on the user side) of the sensor unit 18 is provided a front guide 14. The front guide 14 comprises a sheet of synthetic resin, transparent or substantially transparent.

The front guide 14 serves the purposes of guiding the hand of the user over the unit 18 and of supporting the wrist. Hence the front guide 14 provides guidance to the user so as to guide the wrist over the sensor unit 18 and supports the wrist. As a result, the attitude of the palm of the hand, that is, the position, inclination, and size over the sensor unit 18 can be controlled.

The cross-sectional shape of the front guide 14 has a vertical body and, in the top portion, a horizontal portion 14-1 to support the wrist. A depression (recess) 14-2 is formed continuously in the center of the horizontal portion 14-1, to facilitate positioning of the wrist.

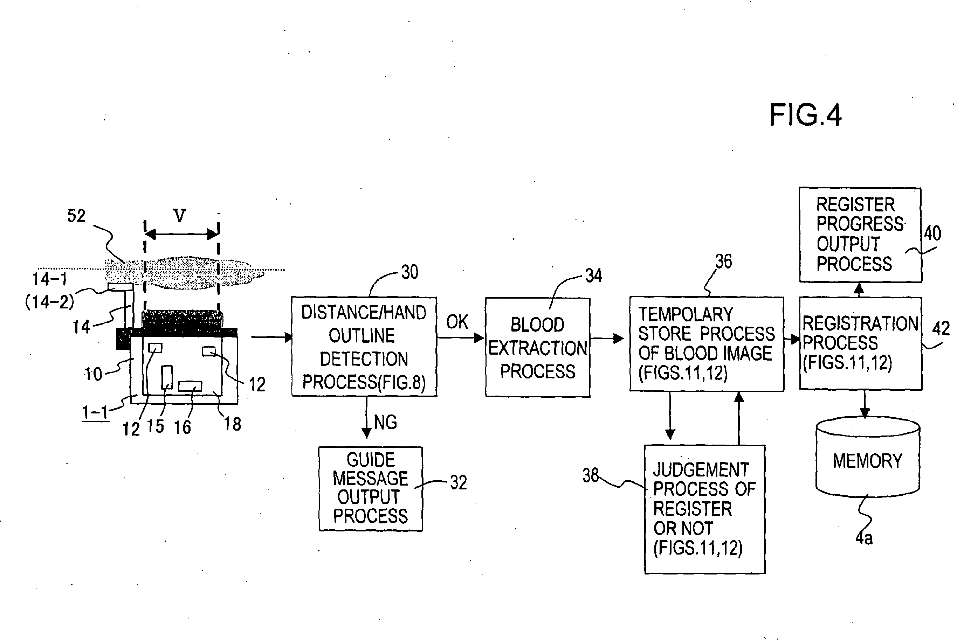

As indicated in Fig. 4 below, the sensor unit 18 is provided with an infrared sensor (CMOS sensor) and focusing lens 16 and a distance sensor 15 in the center; on the periphery thereof are provided a plurality of near-infrared light emission elements (LEDs) 12. For example, near-infrared light emission elements 12 are provided at eight places on the periphery, to emit near-infrared rays upwards.

The readable region V of this sensor unit 18 is regulated by the relationship between the sensor, focusing lens, and near-infrared light emission region. Hence the position and height of the front guide 14 are set such that the supported wrist is positioned in the readable region V.

### Biometric Data Registration Processing

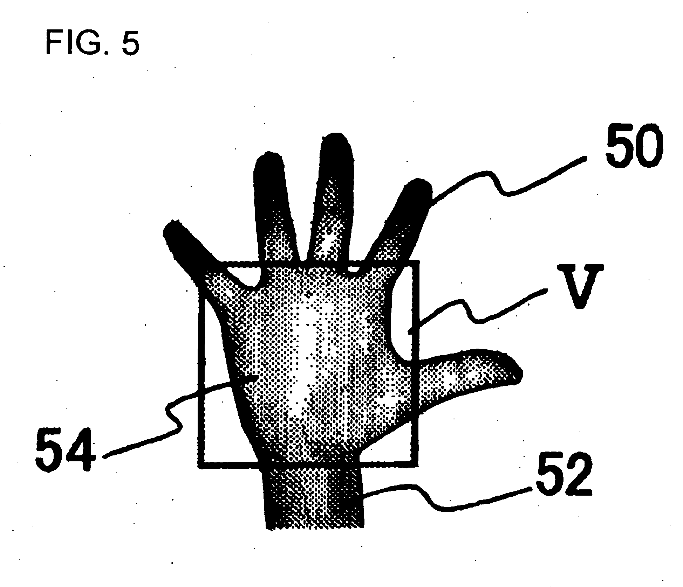

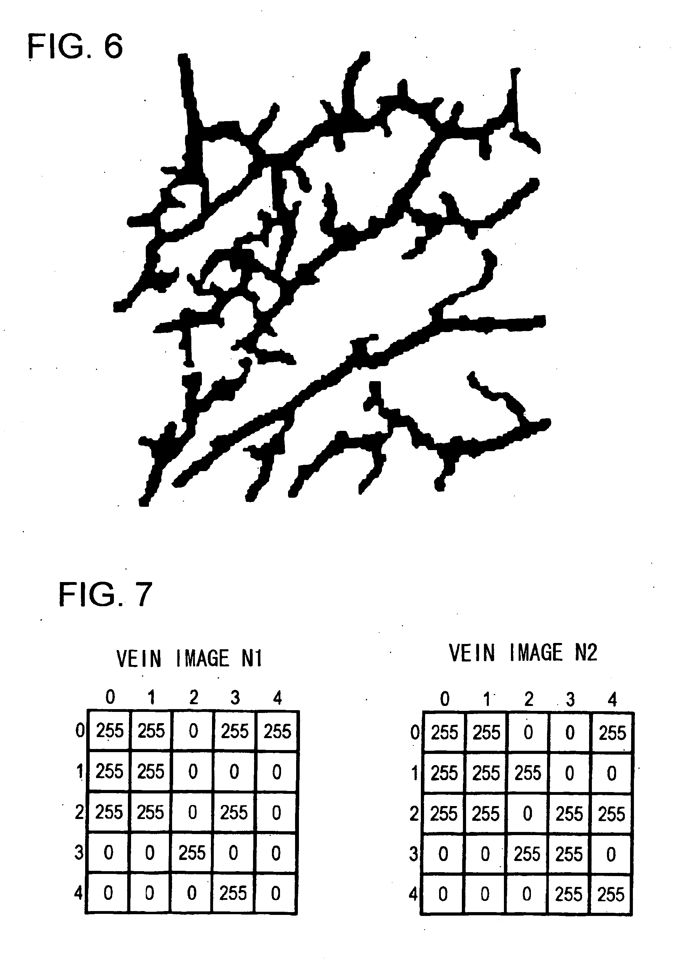

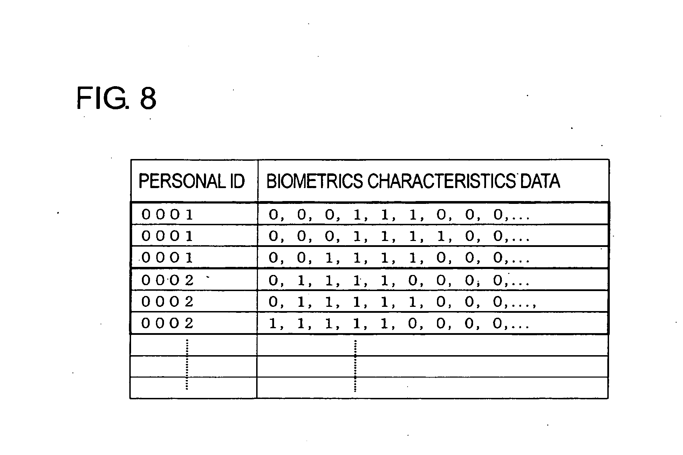

Fig. 4 is a block diagram of the biometric information registration processing of an embodiment of the invention, Fig. 5 explains the relationship between the range of image capture of the image capture device and the palm of the hand, Fig. 6 explains the blood vessel image detected in Fig. 4, Fig. 7 explains the biometric characteristic data of Fig. 4, and Fig. 8 explains registered data.

As shown in Fig. 4, the palm image capture device 1 of Fig. 2 is equipped with a sensor unit 18 substantially in the center of the main unit 10. A front guide 14 is provided on the forward portion (toward the user) of the main unit 10. The front guide 14 comprises a sheet of synthetic resin, transparent or substantially transparent.

The front guide 14 serves the purposes of guiding the hand of the user in the front and of supporting the wrist. Hence the front guide 14 provides guidance to the user so as to guide the wrist over the sensor unit 18 and supports the wrist. As a result, the attitude of the palm of the hand, that is, the position, inclination, and size over the sensor unit 18 can be controlled.

In addition, the sensor unit 18 is provided with an infrared sensor (CMOS sensor) and focusing lens 16 and a distance sensor 15 in the center; on the periphery thereof are provided a plurality of near-infrared light emission elements (LEDs) 12. For example, near-infrared light emission elements 12 are provided at eight places on the periphery, to emit near-infrared rays upwards.

The readable region V of this sensor unit 18 is regulated by the configuration of the sensor, focusing lens, and near-infrared light emission region. Hence the position and height of the front guide 14 are set such that the supported wrist is positioned in the readable region V.

As shown in Fig. 5, when the hand 50 is extended with palm flat, the palm has maximum area, and moreover is flat, so that when the palm is subjected to image capture in the image capture region V of the sensor unit 18, an accurate vein pattern which can be used in registration and verification is obtained. As shown in Fig. 6, when the distance from the sensor unit 18 to the palm is within a prescribed range, a sharp, focused blood vessel image is obtained by the sensor 16 of the sensor unit 18.

Hence as shown in Fig. 4, by having the front guide 14 support the wrist 52 above the sensor unit 18, the position, inclination and height of the palm above the sensor unit 18 are made precise with respect to the image capture range of the sensor unit 18, and the user's hand can be guided and supported.

Returning to Fig. 4, the terminal 3 connected to the image capture device 1 executes a series of registration processing 30 to 42. The control portion of the terminal 3 has, for example, a CPU, various types of memory, interface circuitry, and other circuits necessary for data processing. The CPU executes the series of registration processing 30 to 42.

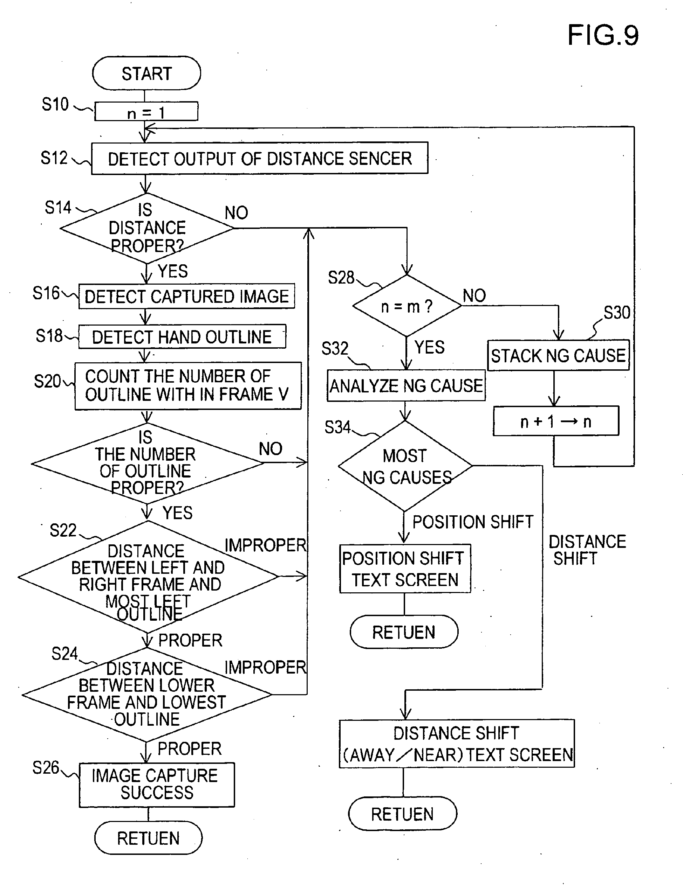

Distance/hand outline detection processing 30 receives the distance from the image capture device 1 measured by the distance sensor 15, judges whether the palm or other object is at a distance within a prescribed range from the sensor unit 18. And moreover the outline detection processing 30 detects the outline of the hand from the image captured by the sensor unit 18, and based on the outline, judges whether the image can be used in registration and verification processing. For example, a judgment is made as to whether enough palm area appears in the image. This processing is described below using Fig. 9.

As explained in Fig. 9 below, guidance message output processing 32 outputs to the display of the terminal 3 a message guiding the palm to the left or right, forward or backward, upward or downward, when the distance measured by the distance sensor 15 indicates that the hand is outside the image capture range, and when the image cannot be used in registration and verification processing. By this means, the hand of the user is guided into position over the image capture device 1.

Blood vessel image extraction processing 34 extracts a vein image from the image of the hand when hand outline detection processing 30 judges that an image has been captured with the hand held correctly. That is, as explained using Fig. 18 and Fig. 20, grayscale data of the image of the palm such as that of Fig. 7 is obtained through differences in reflectivity. The vein pattern image is an image like that shown in Fig. 6; the data is grayscale data such as that in Fig. 7.

Blood vessel image temporary holding processing 36 temporarily holds the extracted blood vessel image data. Register-ability judgment processing 38 judges the degree of similarity of a plurality of blood vessel image data sets, in order to register a plurality of optimal blood vessel image data sets from among the plurality of blood vessel image data sets held by the blood vessel image temporary holding processing 36, to register the data or not. Registration processing 42 registers blood vessel image data judged to be registered in a storage portion 4a. Registration progress output processing 40 outputs the state of progress of registration processing 42 to the display of the terminal device 3.

Thus for each image captured, exactly the same biometric characteristic data is not necessarily obtained, and there are differences according to the image capture device, physical condition of the palm, the manner of extension of the hand, and other factors. Hence image capture is performed a plurality of times, and only optimal information suitable for registration is registered. However, if the person performing registration (the user) were obligated to perform dozens of registration operations, the burden on the user would be severe. Consequently the number of operations is limited to the number likely to be acceptable to users, and the optimal registration information is obtained from this information and is registered in the storage portion 4a. For example, as shown in Fig. 8, three biometric characteristic data sets (blood vessel image data for the palm of the hand) are registered for each individual ID.

### Distance/Hand Outline Detection Processing

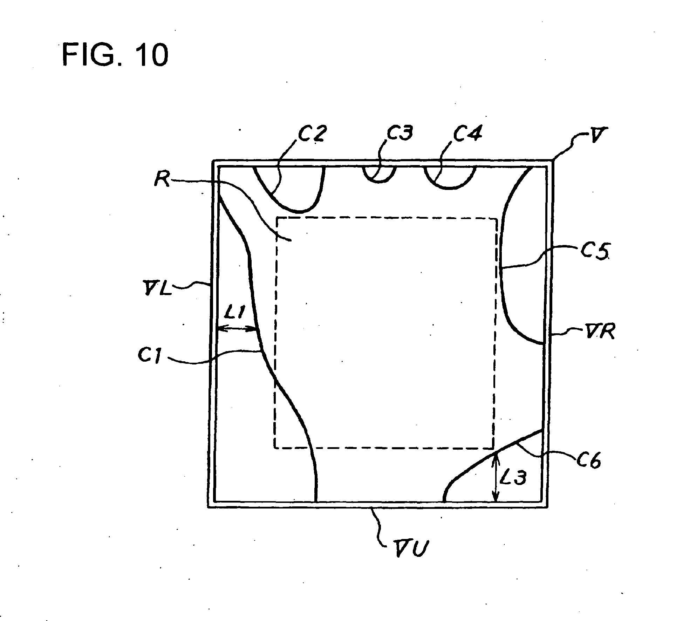

Fig. 9 shows the flow of distance/hand outline detection processing in Fig. 4, and Fig. 10 explains processing to judge the appropriateness of captured images through hand outlines.

(S10) The images captured counter value 'n' is initialized to "1".

(S12) The distance sensor 15 is caused to measure the distance to the palm of the hand, and the output is detected.

(S14) The detected distance and the focal length determined by the sensor and the lens 16 of the sensor unit 18 are compared, and a judgment is made as to whether the distance to the palm is within the appropriate range. The appropriate range may for example employ a narrow margin during registration, with the distance from the sensor unit 18 set to between 50 and 60 mm, whereas during verification, described below, the margin may be made greater, with the distance from the sensor between 40 and 70 mm. By this means, the speed of verification processing can be improved while maintaining the accuracy of registration data.

(S16) If the distance is appropriate, near-infrared light is emitted from the image capture device 1, and the reflected light is received by the sensor 16, to obtain an image of the palm of the hand.

(S18) The outline of the palm of the hand is detected from the image captured by the image capture device 1. As shown in Fig. 5, in order to obtain a blood vessel image of the palm, the image capture range for the hand 50 is limited to V. The image capture range V is set to the range in which an image of the palm of the hand, a portion of the wrist, and the bases of the five fingers is captured. By this means, the sensor unit 18 can be made smaller. When an image is captured with the hand opened and in the correct position as in Fig. 5, there are six outlines within the image capture range V, which are C1 (the left edge of the hand); C2 (between fingers); C3 (between fingers); C4 (between fingers); C5 (between fingers); and C6 (the right edge of the hand, leading to the wrist), as shown in Fig. 10.

(S20) Next, in order to judge whether the image is useable in verification processing based on the outlines, first the number of outlines within the image capture range (frame) V is counted. A judgment is then made as to whether the number of outlines counted is appropriate. As explained above, when fingers are spread and the wrist is present, the number of outlines detected is "6", and judgment is appropriate. On the other hand, if the number of outlines detected is "5" or fewer, either fingers are not spread or the position of the palm is shifted, or fingers of the hand cannot be detected. This image is regarded as inappropriate, and processing proceeds to step S28.

(S22) If the number of outlines is appropriate, then the distances between the outlines and the image frame V are calculated, and from the distances, a judgment is made as to whether there is right-left or forward-backward shifting. As shown in Fig. 10, the distance L1 between the left edge VL of the frame and the leftmost position of the outline C1 is calculated, and judgments made as to whether the calculated distance is within a prescribed distance range, and whether there is left-right shifting; if there is shifting, processing proceeds to step S28.

(S24) Next, as shown in Fig. 10, the distance L3 from the bottom edge VU of the frame and the lowermost position of the outline C6 is calculated, and judgments are made as to whether the calculated distance is within a prescribed distance range, and whether there is forward-backward shifting; if there is shifting, processing proceeds to step S28.

(S26) If there is no shifting forward, because the fingers are spread, the wrist is present, and there is no shifting of positions in the captured image, the image capture is judged to be successful, and the image is provided for registration processing 34-38. Processing then returns. In the registration processing, the image within the dashed-line frame R in Fig. 10 is picked up, and the blood vessel image detection explained in Fig. 4 is performed.

(S28) If on the other hand in step S14 the distance is not appropriate, or in steps S20 to S24 the fingers are not spread or a shift in position is detected, a judgment is made as to whether the images captured counter value 'n' has reached a predetermined number 'm' (for example, 10 times).

(S30) If the images captured counter value 'n' has not reached the predetermined number 'm' (for example, 10 times), the image capture NG (failure) cause (fingers insufficiently spread, left-right/forward-backward shift, distance shift) is (stacked and)held. The images captured counter value 'n' is then changed to "n+1", and processing returns to step S12.

(S32) If on the other hand the images captured counter value 'n' has reached the predetermined number 'm' (for example, 10 times), it is judged that the relation between the palm and the sensor must be modified. Hence the predetermined number m (for example, 10) of stacked image capture NG causes are analyzed. For example, causes are classified into insufficient finger spreading, position shifts (left-right/forward-backward), and distance shifts, and each is counted.

(S34) The counted values are used to detect the most frequent image capture NG cause. When insufficient finger spreading and position shifts are the most frequent cause, a guidance screen with text for finger spreading and position shift is selected, and processing returns. When distance shifts are the most frequent cause, a guidance screen with text for distance shifts is selected, and processing returns.

In this way, the image capture range is limited, outlines in a captured image are extracted, and the outlines are used to judge whether the shape of the hand in the captured image is appropriate, so that compared with conventional methods in which an image of the entire hand is captured and is compared with a basic registration pattern, appropriate palm images can be obtained much more quickly. Also, the sensor unit size can be decreased.

When image capture (including distance measurement) is performed a plurality of times in short intervals, and image capture NG occurs frequently, these are stacked for future use, and if after a prescribed number of image captures the image capture NG has not yet been resolved, it is judged that the relative position of palm and sensor must be corrected. The predetermined number m (for example, 10) of stacked image capture NG causes are then analyzed, and screen guidance for the manner of extension of the hand is provided according to the analysis results.

Hence the guidance screen does not change frequently, and so the user can fully understand the cause of the problem and can change the manner of extension of his hand. As a result, confusion on the part of the user is prevented, the hand can be moved quickly to an appropriate position and distance, and the speed of authentication can be increased.

Further, the most frequently occurring image capture NG is selected, and the user is notified of the cause by a screen, so that occasional image capture NG (no good) causes due to the user can be excluded, and user guidance can be executed more reliably.

### Biometric Characteristic Data Registration Processing Method

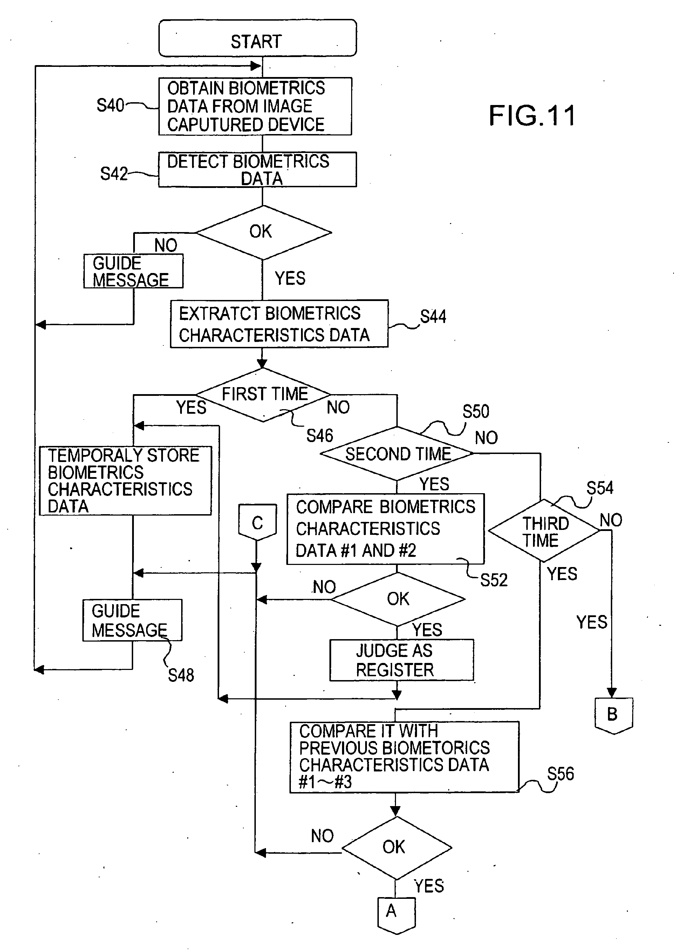

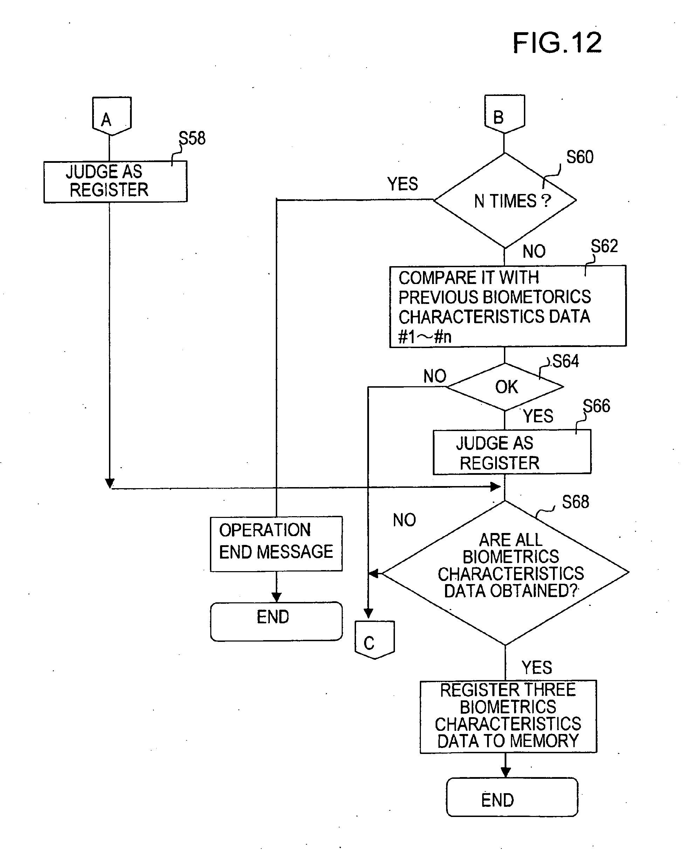

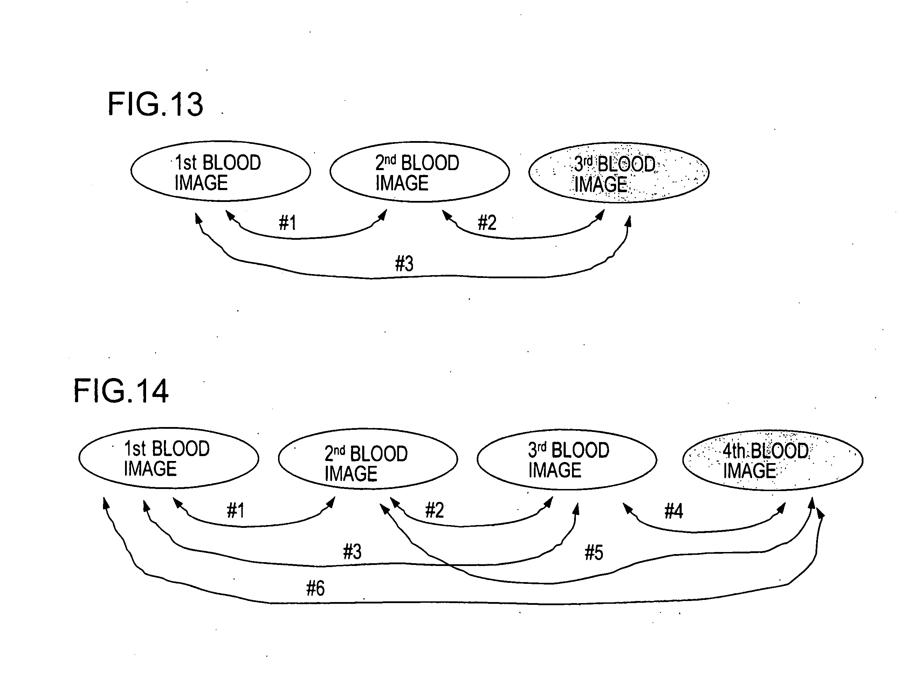

Fig. 11 and Fig. 12 explain the flow of biometric characteristic data registration processing, and Fig. 13 and Fig. 14 explain this processing. The flow of processing in Fig. 11 and Fig. 12 is explained in further detail, referring to Fig. 13 and Fig. 14.

(S40) As explained above, near-infrared light is emitted from the image capture device 1, to obtain an image of the palm of the hand (also called biometrics information).

(S42) As explained above, by means of the hand outline detection processing 30 explained in Fig. 9, the outline of the hand is detected from an image captured by the image capture device 1, and from the outline a judgment is made as to whether the image can be used in registration and verification processing. When the palm of the hand does not appear adequately in the image or in similar cases, a NG judgment is made, a message to provide guidance of the palm of the hand to the left or right, or forward or backward, is output to the display of the terminal device 3 by the guidance message output processing 32 described above, and processing returns to step S40.

(S44) When hand outline detection processing 30 judges that image capture occurs with the hand extended correctly, blood vessel image extraction processing 34 extracts a vein image from the image of the hand.

(S46) A judgment is made as to whether the extraction is the first extraction. If the first extraction, the first blood vessel image is held temporarily.

(S48) Next, a guidance message urging repeated operation is output to the display of the terminal device 3, and processing returns to step S40.

(S50) On the other hand, if in step S46 the extraction is not the first extraction, but is judged to be the second or a subsequent extraction, a judgment is made as to whether the extraction is the second extraction.

(S52) If the extraction is the second extraction, the first blood vessel image data set is compared with the second blood vessel image data set, and the degree of similarity is calculated. The degree of similarity is a quantity indicating the extent of coincidence of the two blood vessel image patterns; various pattern matching techniques can be applied. For example, in the two grayscale representation pixel matrices for blood vessel image patterns in Fig. 7, the pixel values (grayscale values) for a pixel of interest in the two patterns are obtained and compared. If the two coincide, a degree of similarity counter is incremented by "1". The pixel of interest is changed, and pixel values are similarly compared to judge coincidence for the newly selected pixel. If the two coincide, the degree of similarity counter is incremented by "1". This is performed for all the pixels in the pixel matrices, and the value of the degree of similarity counter is taken to be the degree of similarity. If the degree of similarity is equal to or greater than a threshold determined in advance, the two are judged to be similar (OK), the second blood vessel image data set is judged to be registered, the second blood vessel image in step S46 is temporarily held, and processing proceeds to step S48. If on the other hand the degree of similarity does not exceed the threshold, the two are judged to be not similar (NG). Processing then proceeds to the repeated operation guidance message output of step S48.

(S54) If on the other hand in step S50 the extraction is not the second, but is the third or a subsequent extraction, a judgment is made as to whether the extraction is the third extraction. If not the third extraction, processing proceeds to step S60 of Fig. 12.

(S56) On the other hand, if the extraction is the third extraction, then the degrees of similarity between the blood vessel image data extracted thus far (here, the first and second sets) and the third blood vessel image data set are similarly calculated. That is, as shown in Fig. 13, in step S42 the degree of similarity #1 between the second blood vessel image data set and the first blood vessel image data set is calculated. In step S56, the degree of similarity #3 between the third blood vessel image data set and the first blood vessel image data set, and the degree of similarity #2 between the third blood vessel image data set and the second blood vessel image data set, are calculated, and judgments made. If, as a result of these comparisons, all the degrees of similarity #1, #2 and #3 are equal to or greater than the threshold, then all three are judged to be similar blood vessel images. Processing then proceeds to step S58 in Fig. 12. If on the other hand the comparisons of Fig. 13 indicate that any one among the degrees of similarity #1, #2, #3 does not exceed the threshold, processing returns to step S48.

(S58) The third blood vessel image data set is judged to be registered. Processing then proceeds to step S68.

(S60) If in step S54 the extraction is not the third extraction, then a judgment is made as to whether the extraction is the limiting Nth extraction (final reading). If it is, then the operator is shown an operation ended message on the display, and processing ends.

(S62) If not the limiting Nth extraction, then comparisons with the n blood vessel image data sets obtained thus far are performed. For example, if the extraction is the fourth extraction, then as shown in Fig. 14, the degree of similarity #6 between the fourth blood vessel image data set and the first blood vessel image data set, the degree of similarity #5 between the fourth blood vessel image data set and the second blood vessel image data set, and the degree of similarity #4 between the fourth blood vessel image data set and the third blood vessel image data set, are calculated, and judgments made.

(S64) If all of the degrees of similarity #4, #5, #6 are equal to or greater than the threshold, the three blood vessel images with higher degrees of similarity among the first, fourth, second and third sets are judged to be similar, and processing proceeds to step S66. If on the other hand, in the comparisons of Fig. 14, any one among the degrees of similarity #4, #5, #6 is judged not to exceed the threshold, processing returns to step S48 in Fig. 11, and fifth and subsequent images are captured, blood vessel image extraction is performed, and degree of similarity calculations and judgments are similarly performed.

(S66) A judgment is made as to whether the nth blood vessel image data set is registered.

(S68) A judgment is then made as to whether three blood vessel image data sets which are similar and can be registered have been obtained. If not obtained, processing returns to step S48. If obtained, the three blood vessel image data sets are registered in the storage portion 4a, together with a user ID (account number or similar). That is, as shown in Fig. 8, an individual ID and three blood vessel image data sets (here, series of black-and-white binary data values) are registered in the storage portion 4a as the registered blood vessel image data of the storage portion 4a.

As indicated in step S60, when some phenomenon incompatible with registration occurs continuously, the burden on the user is increased, and so a number N may be freely set, and when this number is reached a message is output instructing the user either to repeat operations from the beginning, or to consult with a staff member (e.g. bank teller).

In this way, blood vessel image data is detected a plurality of times, and a plurality (here, three) of blood vessel image data sets with high degree of similarity are registered as the optimum blood vessel image data. Consequently even if there are differences in the biometrics data due to the image capture device, to physical changes of the palm, or to the manner of extension of the hand or other aspects of the state of image capture, because image capture is performed a plurality of times and only optimal biometric information with a high degree of similarity suitable for registration is registered, a plurality of sets of biometrics information can be registered which reflect differences, without lowering the accuracy of verification. If the person performing registration (the user) were obligated to perform dozens of registration operations, the burden on the user would be excessive, and so the number of operations is limited to the number likely to be acceptable to users, and the optimal registration information is obtained from this information and is registered in the storage portion.

Here, the initial blood vessel image data is used as reference in performing registration. Of the second and subsequent blood vessel image patterns, two blood vessel image data sets with a high degree of similarity are registered. Because the initial data is used as reference, indefinite continuation of degree of similarity calculations and judgments can be prevented.

### Trial Authentication And Authentication Processing

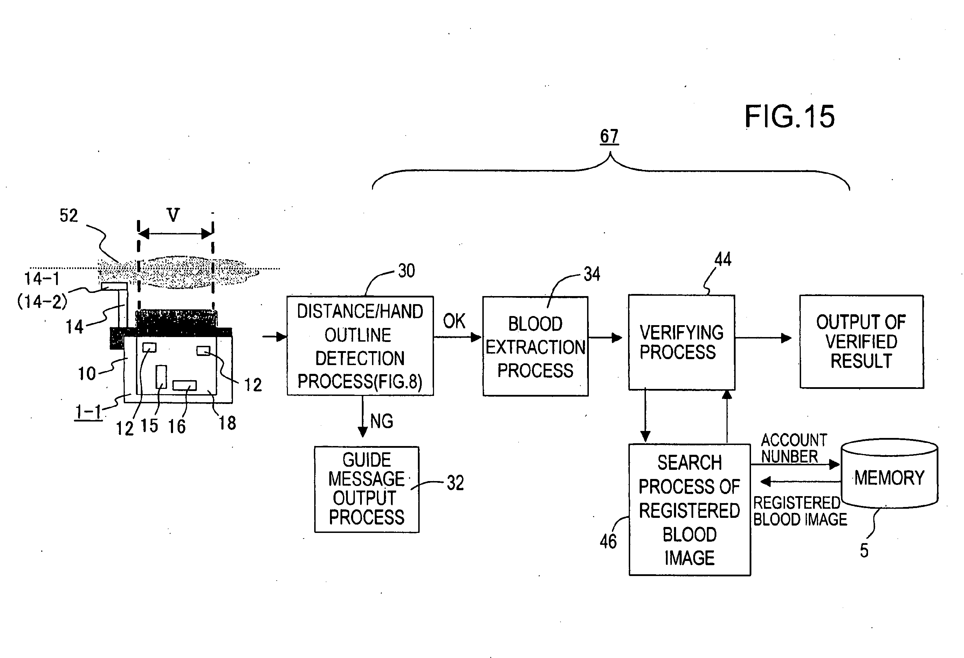

Next, trial authentication is explained. As stated above, when registration of n (in the above explanation, 3) data sets is completed, operation to perform the verification process is immediately executed. Thus, the user extends his hand for verification over the device, and the detected and registered data are compared to confirm that reliable authentication using the user's palm is possible. As a result, the sense of security and reliability of the system on the part of the user is increased. The trial authentication is performed using the same procedure as in actual authentication. Hence the trial authentication is actual authentication processing as well. Below, the processing is explained using Fig. 15 to Fig. 17.

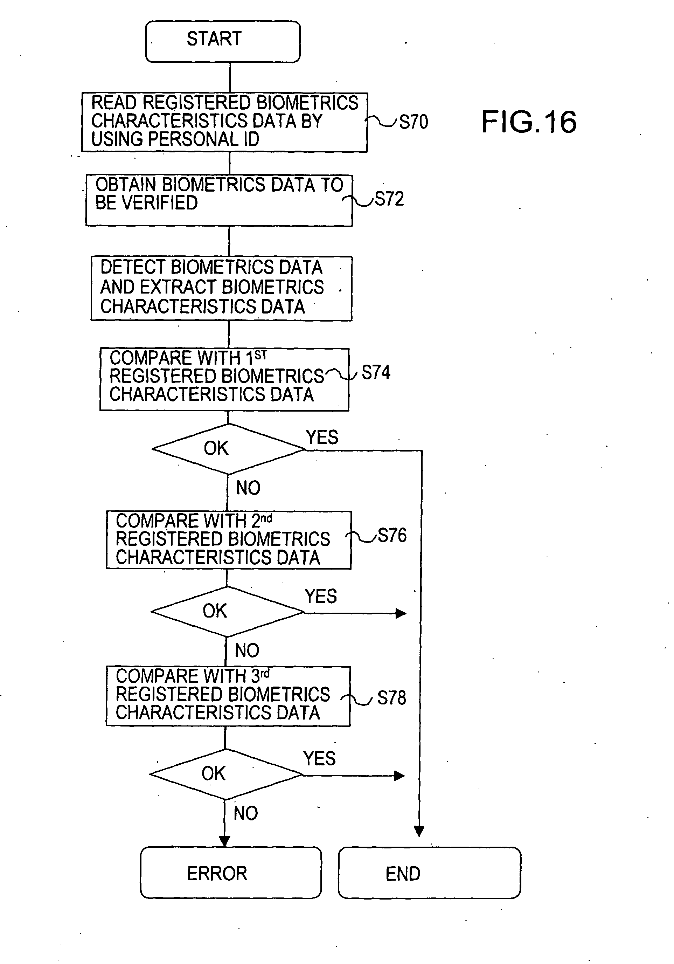

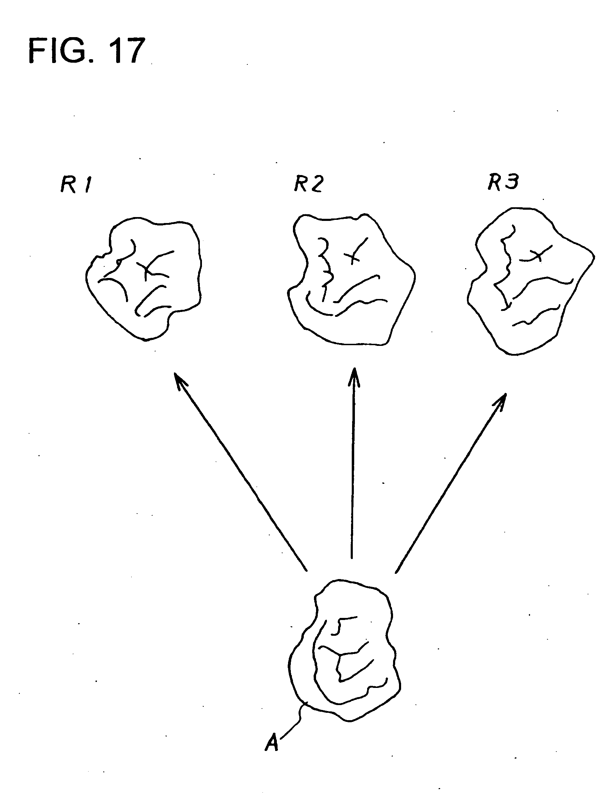

Fig. 15 is a functional block diagram of authentication processing in one aspect of the invention, Fig. 16 shows the flow of authentication processing in Fig. 15, and Fig. 17 explains the operation therein.

In Fig. 15, portions which are the same as in Fig. 2 and Fig. 4 are denoted by the same symbols. That is, the CPU of the terminal device 3 connected to the image capture device 1 executes the series of authentication processing 30 to 46.

As explained above using Fig. 9, hand outline detection processing 30 detects the outline of the hand from an image captured by the image capture device 1, and from the outline judges whether the image can be used in registration and verification processing. For example, the palm of the hand may or may not appear adequately in the image. Guidance message output processing 32 outputs to the display of the terminal device 3 a message to guide the palm of the hand leftward, rightward, forward or backward when the image cannot be used in registration and verification processing. By this means, the user at the terminal device 3 is guided in extending the user's hand over the image capture device 1.

When hand outline detection processing 30 judges that an image is successfully captured with the hand extended correctly, blood image extraction processing 34 extracts a vein image from the image of the hand. That is, as explained using Fig. 18 and Fig. 19, grayscale data of the image of the palm of the hand is obtained from differences in reflectivity, as in Fig. 6.

As shown in Fig. 8, registered blood vessel image search processing 46 searches the storage portion 4a for three registered blood vessel image data sets R1, R2, R3 corresponding to the individual ID (account number). As shown in Fig. 17, verification processing 44 compares the blood vessel image data A detected by the blood vessel image detection processing 34 with the three registered blood vessel image data sets R1, R2, R3, performs verification processing, and outputs a verification result.

A more detailed explanation is given using Fig. 16.

(S70) The ID (account number) presented by the user is employed to read the,three corresponding registered blood vessel image data sets R1, R2, R3 in the storage portion 4a.

(S72) Near-infrared light is emitted from the image capture device 1 to obtain an image of the palm of a hand. Hand outline detection processing 30 is performed to detect the outline of the hand from the image captured by the image capture device 1, and the outline is used to judge whether the image can be used in verification processing. If the palm image is not correctly positioned or other problems occur, an NG judgment is returned, and the above-described guidance message output processing 32 is performed to output to the display of the terminal device 3 a message guiding the palm of the hand leftward, rightward, forward or backward. When hand outline detection processing 30 judges that an image has been captured with the hand extended correctly, blood vessel image extraction processing 34 extracts a vein image from the image of the hand.

(S74) The first registered blood vessel image data set R1 and the extracted blood vessel image data A are compared, and the degree of similarity calculated. The degree of similarity is a quantity indicating the extent of coincidence of the two blood vessel image patterns; various pattern matching techniques can be applied. If the degree of similarity is equal to or greater than a threshold determined in advance, the two are judged to be similar (OK), authentication is successful, and processing ends.

(S76) On the other hand, if in step S74 the degree of similarity does not exceed the threshold, a judgment of non-similarity (NG) is returned. The second registered blood vessel image data set R2 is then compared with the extracted blood vessel image data A, and the degree of similarity is calculated. If the degree of similarity is equal to or greater than a threshold determined in advance, the two are judged to be similar (OK), authentication is successful, and processing ends.

(S78) On the other hand, if in step S76 the degree of similarity does not exceed the threshold, a judgment of non-similarity (NG) is returned. The third registered blood vessel image data set R3 is then compared with the extracted blood vessel image data A, and the degree of similarity is calculated. If the degree of similarity is equal to or greater than a threshold determined in advance, the two are judged to be similar (OK), authentication is successful, and processing ends. If, however, the degree of similarity does not exceed the threshold, a judgement of non-similarity (NG) is returned, and processing ends with an error (i.e.the user is not authenticated).

In this trial authentication, as shown in Fig. 15, if the verification processing is not satisfactory, the image capture device 1 can be instructed to capture a new image. Hence the user is provided with more opportunities for trial authentication, and can become accustomed to the authentication method, contributing to the widespread adoption of the authentication equipment. This authentication processing is similar to actual authentication processing, and because an explanation would be redundant, details of the actual authentication processing are omitted. Of course, a different criterion for comparison of the degree of similarity with the threshold than that described above (greater than or equal to) can be used.

### Other Embodiments

In the above embodiment, biometric authentication was explained for the case of authentication using the vein pattern in the palm of a hand; but application to biometric authentication employing palm-prints or other features of the hand, or of other body parts is possible. Also, the explanation assumed financial operations, but application to any task requiring verification of a person's identity is possible.

Further, calculation of degrees of similarity was explained using bitmap pattern matching techniques; but well-known methods in which data is vectorized, and the directions and lengths of vectors are used to calculate degrees of similarity, may also be employed. Also, the number of registrations is not limited to three, but may be any number greater than one. Verification (authentication) processing may be performed by the same method as in Fig. 15 to Fig. 17, and may be executed by the service area terminal 8 or ATM 6 of Fig. 1.

In the above, embodiments of the invention have been explained; but the invention can be variously modified within the scope of the claims**,** and these modifications are not excluded from the scope of the invention.

Because images of the palm of a hand of the same body are captured a plurality of times by an image capture unit, degrees of similarity between characteristic data sets of the plurality of images of the palm of the hand are calculated, and a plurality of characteristic data sets with a high degree of similarity are registered in a storage unit, even when using characteristic data detected a plurality of times, verification can be performed which accommodates changes in the read biometric state without lowering the verification accuracy, and reliability can thus be improved, reassuring the user and contributing to the widespread adoption of the biometric authentication system. Further, because the shape of the hand in an image can be checked using outlines in the image of the palm of the hand, whether an appropriate image has been captured can be judged rapidly and characteristic data can be extracted, so that registration processing can be executed in a short length of time.

## Claims

1. A biometric authentication system for use in authenticating an individual by detecting and registering characteristic data (R1, R2, R3) of a hand of a user, and subsequently detecting characteristic data (A) from the hand of the user and verifying the detected characteristic data against said registered characteristic data, said system comprising:
an image capture unit (1) for capturing images of the hand of said user; and
a storage unit (4a) for storing the registered characteristic data (R1, R2, R3) of the hand of said user; **characterised by** further comprising
a processing unit (3) for extracting silhouette segments (C1...C6) from an image of the hand captured by said image capture unit (1), the silhouette segments being obtained from the restricted outline of the palm of the hand in an image capture range (V) of said image capture unit (1), and for judging from said extracted silhouette segments (C1...C6) whether said image has been captured successfully, extracting said characteristic data from the image if it is judged to have been captured successfully, and registering said characteristic data (R1, R2, R3) in said storage unit (4a),
wherein said processing unit (3) is operable to obtain a plurality of images of the hand of said user from said image capture unit (1), judge the degree of similarity among characteristic data between each of said plurality of images of the hand, and register in said storage unit (4a) a plurality of characteristic data sets (R1, R2, R3) with a high degree of similarity from the plurality of images;
wherein said image capture unit (1) is operable to capture a portion of a hand, in the image capture range (V), including the palm of the hand of said user and a portion of the fingers, and wherein said characteristic data (R1, R2, R3) is data from the palm of the hand; and
wherein
said processing unit (3) is operable to judge whether said image capture has been successful from the number of silhouette segments in an image of the palm of said hand within said image capture range (V).

2. The biometric authentication system according to Claim 1, wherein said processing unit (3) is operable to judge the degree of similarity of the second and subsequent characteristic data sets (R2, R3) of the hand, with reference to the first characteristic data set (R1) of the hand.

3. The biometric authentication system according to Claim 1 or 2, wherein said processing unit (3) is operable to obtain images of the hand of said same user from said image capture unit (1), until a prescribed number of characteristic data sets (R1, R2, R3) with a high degree of similarity are obtained.

4. The biometric authentication system according to any preceding Claim, wherein said processing unit (3), after registering said plurality of characteristic data sets (R1, R2, R3) with a high degree of similarity in said storage unit (4a), obtains from said image capture unit (1) an image of the said hand, extracts said characteristic data (A), verifies said characteristic data (A) against said plurality of characteristic data sets (R1, R2, R3) registered in said storage unit (4a), and thus performs a trial authentication of the user.

5. The biometric authentication system according to any preceding Claim, wherein said processing unit (3) also performs individual authentication by extracting silhouette segments (C1...C6) from an image of a hand of another user captured by said image capture unit (1), judging whether said image capture has been successful from said extracted silhouette segments, extracting characteristic data (A) from the image if it is judged to have been captured successfully, verifying this characteristic data (A) against said plurality of characteristic data sets (R1, R2, R3) registered in said storage unit (4a), and determining whether the another user is the same as the user.

6. The biometric authentication system according to any preceding Claim, wherein said processing unit (3) judges the degree of similarity to be high when said degree of similarity is equal to or greater than a prescribed threshold.

7. The biometric authentication system according to any preceding Claim, wherein said processing unit (3) registers the first biometric characteristic data set (R1), and for an nth biometric characteristic data set, calculates all the degrees of similarity with the first to the (n-1) th biometric characteristic data sets, and when all degrees of similarity are equal to or greater than a threshold, registers said nth biometric characteristic data set in said storage unit (4a).

8. The biometric authentication system according to Claim 5, wherein, at the time of individual authentication, said processing unit (3) reads said plurality of biometric characteristic data sets (R1, R2, R3) from said storage unit (4a) according to identification information for the user, and verifies said characteristic data (A) obtained from the image of the hand obtained from said image capture unit (1) against said plurality of characteristic data sets.

9. The biometric authentication system according to Claim 8, wherein said processing unit (3) detects the fact that said extracted characteristic data (A) is similar to one of said plurality of registered characteristic data sets (R1, R2, R3), and thus authenticates the another user as the user.

10. The biometric authentication system according to Claim 1, wherein said processing unit (3) judges whether said image capture has been successful from the positional relationship of the silhouette segments (C1...C6) of the image of the palm of said hand to the frame of the image capture range (V) of said image capture unit (1) and from the number of said silhouette segments within said image capture range (V).

11. The biometric authentication system according to any preceding Claim, wherein said processing unit (3), upon judging that said image capture has not been successful from silhouette segments (C1...C6) of an image of the hand, causes said image capture unit (1) to again perform image capture of the hand, and obtains a new image of the hand.

12. The biometric authentication system according to Claim 5, or any of claims 6 to 11 when appended to claim 5,
wherein said image capture unit (1) has a distance sensor (15) for measuring the distance between said image capture unit (1) and the hand,
and said processing unit (3) obtains the image of the hand from said image capture unit (1) when the distance measured by said distance sensor (15) is within a prescribed range, and changes said prescribed range depending on whether images are being captured for registration or for individual authentication of a user.

13. A registration method for a biometric authentication system for use in authenticating an individual by detecting and registering characteristic data (R1, R2, R3) of a hand of a user for future use, and subsequently detecting characteristic data (A) from the hand of the user and verifying the detected characteristic data against said registering characteristic data, the method comprising the step of:
obtaining an image of the hand of the user from an image capture unit (1) which captures images of the hand; **characterised by** further comprising
extracting silhouette segments (C1...C6) of the image of the hand, and judging, from said silhouette segments, whether said image capture has been successful, the silhouette segments being obtained from the restricted outline of the palm of the hand in an image capture range (V) of said image capture unit (1);
extracting the characteristic data (R1, R2, R3) from an image of the hand capture of which has been successful;
judging the degree of similarity among a plurality of characteristic data sets (R1, R2, R3) extracted from a plurality of said capture images; and
registering a plurality of characteristic data sets (R1, R2, R3) with a high degree of similarity in a storage unit (4a);
wherein said image obtaining step comprises obtaining, from the image capture range (V) of said image capture unit (1), a captured image of a portion of the hand including the palm of the hand of said user and a portion of the fingers, and wherein said characteristic data (R1, R2, R3) is data from the palm of the hand; and wherein
said step of judging the success of said image capture comprises judging whether said image capture has been successful from the number of silhouette segments (C1...C6) in the image of the palm of said hand within said image capture range (V).

14. The registration method for a biometric authentication system according to Claim 13, wherein said step of judging the degree of similarity comprises judging the degree of similarity of the second and subsequent characteristic data sets (R2, R3) of the hand with reference to the initial characteristic data set (R1) of the hand.

15. The registration method for a biometric authentication system according to Claim 13 or 14, further comprising a step of obtaining images of the hand of the same user from said image capture unit (1), until a prescribed number of said characteristic data sets (R1, R2, R3) with high degree of similarity are obtained.

16. The registration method for a biometric authentication system according to any of Claims 13 to 15, further comprising the steps of:
obtaining an image of the hand from said image capture unit (1), after registering a plurality of said characteristic data sets (R1, R2, R3) with a high degree of similarity in said storage unit (4a);
extracting silhouette segments (C1...C6) of the image of the hand and judging from said silhouette segments whether said image capture has been successful;
extracting characteristic data (A) from the image of the hand capture of which has been successful; and
verifying said characteristic data (A) against the plurality of characteristic data sets (R1, R2, R3) registered in said storage unit (4a).

17. The registration method for a biometric authentication system according to any of Claims 13 to 16,
wherein said step of judging the degree of similarity comprises judging the degree of similarity to be high when said degree of similarity is equal to or greater than a prescribed threshold.

18. The registration method for a biometric authentication system according to any of Claims 13 to 17,
wherein said step of judging the degree of similarity comprises:
a step of calculating, for an nth biometric characteristic data set, the degrees of similarity with all of the first to the (n-1) th biometric characteristic data sets; and
a set of judging said nth biometric characteristic data set to be characteristic data suitable for registration when all degrees of similarity are equal to or greater than a threshold.

19. The registration method for a biometric authentication system according to any of Claims 13 to 18,
wherein said step of judging the success of said image capture comprises judging whether said image capture has been successful from the positional relationship between the silhouette segments (C1...C6) of the image of the hand to the frame of the image capture range (V) of said image capture unit (1), and from the number of said silhouette segments within said image capture range (V).

20. The registration method for a biometric authentication system according to any of Claims 13 to 19, further comprising a step of causing said image capture unit (1) to again capture an image of the hand, when said judgement step judges that said image capture is not successful from the silhouette segments (C1...C6) of the image of the said hand.

21. The registration method for a biometric authentication system according to any of Claims 13 to 20,
wherein said image obtaining step comprises a step of obtaining an image of the hand from said image capture unit (1) when the distance measured by a distance sensor (15) which measures the distance between said image capture unit and the hand is within a prescribed range.

22. A program containing program code which, when executed by a computer, causes the computer to perform the method according to any of claims 13 to 21.

## Patentansprüche

1. Biometrisches Authentisierungssystem, zur Verwendung beim Authentisieren einer Person durch Detektieren und Registrieren von charakteristischen Daten (R1, R2, R3) einer Hand eines Nutzers und nachfolgendes Detektieren von charakteristischen Daten (A) von der Hand des Nutzers und Verifizieren der detektierten charakteristischen Daten gegenüber den registrierten charakteristischen Daten, welches System umfasst:
eine Bilderfassungseinheit (1) zum Erfassen von Bildern der Hand des Nutzers; und
eine speichereinheit (4a) zum Speichern der registrierten charakteristischen Daten (R1, R2, R3) der Hand des Nutzers; **dadurch gekennzeichnet, dass** es ferner umfasst:
eine Verarbeitungseinheit (3) zum Extrahieren von Silhouettensegmenten (C1...C6) aus einem Bild der Hand, das durch die Bilderfassungseinheit (1) erfasst wurde, welche Silhouettensegmente von der begrenzten Kontur der Handfläche der Hand in einem Bildcrfassungsbereich (V) der Bilderfassungseinheit (1) erlangt werden, und zum Beurteilen, nach den extrahierten Silhouettensegmenten (C1...C6), ob das Bild erfolgreich erfasst worden ist, Extrahieren der charakteristischen Daten aus dem Bild, falls beurteilt wird, dass es erfolgreich erfasst worden ist, und Registrieren der charakteristischen Daten (R1, R2, R3) in der Speichereinheit (4a),
bei dem die Verarbeitungseinheit (3) betriebsfähig ist, um eine Vielzahl von Bildern der Hand des Nutzers von der Bilderfassungseinheit (1) zu erlangen, den Ähnlichkeitsgrad unter charakteristischen Daten zwischen jedem von der Vielzahl von Bildern der Hand zu beurteilen und in der Speichereinheit (4a) eine Vielzahl von charakteristischen Datensätzen (R1, R2, R3) mit einem hohen Ähnlichkeitsgrad von der Vielzahl von Bildern zu registrieren;
bei dem die Bilderfassungseinheit (1) betriebsfähig ist, um einen Abschnitt einer Hand, in dem Bildcrfassungsbereich (V), zu erfassen, der die Handfläche der Hand des Nutzers und einen Abschnitt der Finger enthält, und bei dem die charakteristischen Daten (R1, R2, R3) Daten von der Handfläche der Hand sind; und bei dem
die Verarbeitungseinheit (3) betriebsfähig ist, um nach der Anzahl von Silhouettensegmenten in einem Bild der Handfläche der Hand innerhalb des Bilderfassungsbereiches (V) zu beurteilen, ob die Bilderfassung erfolgreich gewesen ist.

2. Biometrisches Authentisierungssystem nach Anspruch 1, bei dem die Verarbeitungseinheit (3) betriebsfähig ist, um den Ähnlichkeitsgrad der zweiten und nachfolgenden charakteristischen Datensätze (R2, R3) der Hand unter Bezugnahme auf den ersten charakteristischen Datensatz (R1) der Hand zu beurteilen.

3. Biometrisches Authentisierungssystem nach Anspruch 1 oder 2, bei dem die Verarbeitungseinheit (3) betriebsfähig ist, um Bilder der Hand desselben Nutzers von der Bilderfassungseinheit (1) zu erlangen, bis eine vorgeschriebene Anzahl von charakteristischen Datensätzen (R1, R2, R3) mit einem hohen Ähnlichkeitsgrad erlangt ist.

4. Biometrisches Authentisierungssystem nach einem vorhergehenden Anspruch, bei dem die Verarbeitungseinheit (3), nach dem Registrieren dcr Vielzahl von charakteristischen Datensätzen (R1, R2, R3) mit einem hohen Ähnlichkeitsgrad in der Speichereinheit (4a), von der Bilderfassungseinheit (1) ein Bild der Hand erlangt, die charakteristischen Daten (A) extrahiert, die charakteristischen Daten (A) gegenüber der Vielzahl von charakteristischen Datensätzen (R1, R2, R3), die in der Speichereinheit (4a) registriert sind, verifiziert und so eine Authentisierung des Nutzers durch Probieren ausführt.

5. Biometrisches Authentisierungssystem nach einem vorhergehenden Anspruch, bei dem die Verarbeitungseinheit (3) auch eine Personenauthentisierung durch Extrahieren von Silhouettensegmenten (C1...C6) aus einem Bild einer Hand eines anderen Nutzers ausführt, das durch die Bilderfassungseinheit (1) erfasst wurde, Beurteilen, ob die Bilderfassung erfolgreich gewesen ist, nach den extrahierten Silhouettensegmenten, Extrahieren von charakteristischen Daten (A) aus dem Bild, falls beurteilt wird, dass es erfolgreich erfasst worden ist, Verifizieren dieser charakteristischen Daten (A) gegenüber der Vielzahl von charakteristischen Datensätzen (R1, R2, R3), die in der Speichereinheit (4a) registriert sind, und Bestimmen, ob der andere Nutzer derselbe wie der Nutzer ist.

6. Biometrisches Authentisierungssystem nach einem vorhergehenden Anspruch, bei dem die Verarbeitungseinheit (3) den Ähnlichkeitsgrad als hoch beurteilt, wenn der Ähnlichkeitsgrad größer gleich einer vorgeschriebenen Schwelle ist.

7. Biometrisches Authentisierungssystem nach einem vorhergehenden Anspruch, bei dem die Verarbeitungseinheit (3) den ersten biometrischen charakteristischen Datensatz (R1) registriert und für einen n-ten biometrischen charakteristischen Datensatz alle Ähnlichkeitsgrade mit den ersten bis (n-1)-ten biometrischen charakteristischen Datensätzen berechnet, und wenn alle Ähnlichkeitsgrade größer gleich einer Schwelle sind, den n-ten biometrischen charakteristischen Datensatz in der Speichereinheit (4a) registriert.

8. Biometrisches Authentisierungssystem nach Anspruch 5, bei dem, zu der Zeit der Personenauthentisierung, die Verarbeitungseinheit (3) die Vielzahl von biometrischen charakteristischen Datensätzen (R1, R2, R3) aus der Speichereinheit (4a) gemäß Identifikationsinformationen für den Nutzer liest und die charakteristischen Daten (A), die von dem Bild der Hand erlangt wurden, das von der Bilderfassungseinheit (1) erlangt wurde, gegenüber der Vielzahl von charakteristischen Datensätzen verifiziert.

9. Biometrisches Authentisierungssystem nach Anspruch 8, bei dem die Verarbeitungseinheit (3) den Fakt detektiert, dass die extrahierten charakteristischen Daten (A) einem von der Vielzahl von registrierten charakteristischen Datensätzen (R1, R2, R3) ähnlich sind, und so den anderen Nutzer als den Nutzer authentisiert.

10. Biometrisches Authentisierungssystem nach Anspruch 1, bei dem die Verarbeitungseinheit (3) nach der positionellen Beziehung der Silhouettensegmente (C1...C6) des Bildes der Handfläche der Hand zu dem Rahmen des Bilderfassungsbereiches (V) der Bilderfassungseinheit (1) und nach der Anzahl der Silhouettensegmente innerhalb des Bilderfassungsbereiches (V) beurteilt, ob die Bilderfassung erfolgreich gewesen ist.

11. Biometrisches Authentisierungssystem nach einem vorhergehenden Anspruch, bei dem die Verarbeitungseinheit (3), nach dem Beurteilen, nach Silhouettensegmenten (C1...C6) eines Bildes der Hand, dass die Bilderfassung nicht erfolgreich gewesen ist, bewirkt, dass die Bilderfassungseinheit (1) die Bilderfassung der Hand wieder ausführt und ein neues Bild der Hand erlangt.

12. Biometrisches Authentisierungssystem nach Anspruch 5, oder nach einem der Ansprüche 6 bis 11 in Verbindung mit Anspruch 5, bei dem die Bilderfassungseinheit (1) einen Distanzsensor (15) zum Messen der Distanz zwischen der Bilderfassungseinheit (1) und der Hand hat,
und die verarbeitungseinheit (3) das Bild der Hand von der Bilderfassungseinheit (1) erlangt, wenn die durch den Distanzsensor (15) gemessene Distanz innerhalb eines vorgeschriebenen Bereiches liegt, und den vorgeschriebenen Bereich in Abhängigkeit davon verändert, ob Bilder zur Registrierung oder zur Personenauthentisierung eines Nutzers erfasst werden.

13. Registrierungsverfahren für ein biometrisches Authentisierungssystem, zur Verwendung beim Authentisieren einer Person durch Detektieren und Registrieren von charakteristischen Daten (R1, R2, R3) einer Hand eines Nutzers zur künftigen Verwendung und nachfolgendes Detektieren von charakteristischen Daten (A) von der Hand des Nutzers und Verifizieren der detektierten charakteristischen Daten gegenüber den registrierten charakteristischen Daten, welches Verfahren dcn Schritt umfasst:
Erlangen eines Bildes der Hand des Nutzers von einer Bilderfassungseinheit (1), die Bilder der Hand erfasst; **dadurch gekennzeichnet, dass** es ferner umfasst:
Extrahieren von Silhouettensegmenten (C1...C6) des Bildes der Hand und Beurteilen, nach den Silhouettenscgmcnten, ob das Bild erfolgreich erfasst worden ist, welche Silhouettensegmente von der begrenzten Kontur der Handfläche der Hand in einem Bilderfassungsbereich (V) der Bilderfassungseinheit (1) erlangt werden;
Extrahieren der charakteristischen Daten (R1, R2, R3) aus einem Bild der Hand, dessen Erfassung erfolgreich gewesen ist;
Beurteilen des Ähnlichkeitsgrades unter einer Vielzahl von charakteristischen Datensätzen (R1, R2, R3), die aus einer Vielzahl der Erfassungsbilder extrahiert wurden; und
Registrieren einer Vielzahl von charakteristischen Datensätzen (R1, R2, R3) mit einem hohen Ähnlichkeitsgrad in einer Speichereinheit (4a);
bei dem der Bilderlangungsschritt das Erlangen, von dem Bilderfassungsbereich (V) der Bilderfassungseinheit (1), eines erfassten Bildes eines Abschnittes der Hand umfasst, der die Handfläche der Hand des Nutzers und einen Anschnitt der Finger enthält, und bei dem die charakteristischen Daten (R1, R2, R3) Daten von der Handfläche der Hand sind; und bei dem
der SchritL zum Beurteilen des Erfolges der Bilderfassung das Beurteilen dessen, ob die Bilderfassung erfolgreich gewesen ist, nach der Anzahl von Silhouettensegmenten (C1...C6) in dem Bild der Handfläche der Hand innerhalb des Bilderfassungsbereiches (V) umfasst.

14. Registrierungsverfahren für ein biometrisches Authentisierungssystem nach Anspruch 13, bei dem der Schritt zum Beurteilen des Ähnlichkeitsgrades das Beurteilen des Ähnlichkeitsgrades der zweiten und nachfolgenden charakteristischen Datensätze (R2, F3) der Hand unter Bezugnahme auf den anfänglichen charakteristischen Datensatz (R1) der Hand umfasst.

15. Hegistrierungsverfahren für ein biometrisches Authentisierungssystem nach Anspruch 13 oder 14, ferner mit einem Schritt zum Erlangen von Bildern der Hand desselben Nutzers von der Bilderfassungseinheit (1), bis eine vorgeschriebene Anzahl der charakteristischen Datensätze (R1, R2, R3) mit hohem Ähnlichkeitsgrad erlangt ist.

16. Registrierungsverfahren für ein biometrisches Authentisierungssystem nach einem der Ansprüche 13 bis 15, ferner mit den Schritten:
Erlangen eines Bildes der Hand von der Bilderfassungseinheit (1), nach dem Registrieren einer Vielzahl der charakteristischen Datensätze (R1, R2, R3) mit einem hohen Ähnlichkeitsgrad in der Speichereinheit (4a);
Extrahieren von Silhouettensegmenten (C1...C6) des Bildes der Hand und Beurteilen, nach den Silhouettensegmenten, ob die Bilderfassung erfolgreich gewesen ist;
Extrahieren von charakteristischen Daten (A) aus dem Bild der Hand, dessen Erfassung erfolgreich gewesen ist; und
Verifizieren der charakteristischen Daten (A) gegenüber der Vielzahl von charakteristischen Datensätzen (R1, R2, R3), die in der Speichereinheit (4a) registriert sind.

17. Registrierungsverfahren für ein biometrisches Authentisierungssystem nach einem der Ansprüche 13 bis 16, bei dem der Schritt zum Beurteilen des Ähnlichkeitsgrades das Beurteilen des Ähnlichkeitsgrades als hoch umfasst, wenn der Ähnlichkeitsgrad größer gleich einer vorgeschriebenen Schwelle ist.

18. Registrierungsverfahren für ein biometrisches Authentisierungssystem nach einem der Ansprüche 13 bis 17, bei dem der Schritt zum Beurteilen des Ähnlichkeitsgrades umfasst:
einen Schritt zum Berechnen, für einen n-tcn biometrischen charakteristischen Datensatz, der Ähnlichkeitsgrade mit allen der ersten bis (n-1)-ten biometrischen charakteristischen Datensätze; und
einen Schrift zum Beurteilen des n-ten biometrischen charakteristischen Datensatzes als charakteristische Daten, die zur Registrierung geeignet sind, wenn alle Ähnlichkeitsgrade größer gleich einer Schwelle sind.

19. Registrierungsverfahren für ein biometrisches Authentisierungssystem nach einem der Ansprüche 13 bis 18, bei dem der Schritt zum Beurteilen des Erfolges der Bilderfassung das Beurteilen dessen, ob die Bilderfassung erfolgreich gewesen ist, nach der positionellen Beziehung zwischen den Silhouettensegmenten (C1...C6) des Bildes der Hand zu dem Rahmen des Bilderfassungsbereiches (V) der Bilderfassungseinheit (1) und nach der Anzahl der Silhouettensegmente innerhalb des Bilderfassungsbereiches (V) umfasst.

20. Registrierungsverfahren für cin biometrisches Authentisierungssystem nach einem der Ansprüche 13 bis 19, ferner mit einem Schritt zum Bewirken, dass die Rilderfassungseinheit (1) ein Bild der Hand wieder erfasst, wenn der Beurteilungsschritt nach den Silhouettensegmenten (C1...C6) des Bildes der Hand beurteilt, dass die Bilderfassung nicht erfolgreich ist.

21. Registrierungsverfahren für ein biometrisches Authentisierungssystem nach einem der Ansprüche 13 bis 20, bei dem der Bilderlangungsschritt einen Schritt zum Erlangen eines Bildes der Hand von der Bilderfassungseinheit (1) umfasst, wenn die Distanz, die durch einen Distanzsensor (15) gemessen wird, der die Distanz zwischen der Bilderfassungseinheit und der Hand misst, innerhalb eines vorgeschriebenen Bereiches liegt.

22. Programm, das einen Programmcode enthält, der bei Ausführung durch einen Computer bewirkt, dass der Computer das Verfahren nach einem der Ansprüche 13 bis 21 ausführt.

## Revendications

1. Système d'authentification biométrique à utiliser pour l'authentification d'un individu en détectant et en enregistrant les données caractéristiques (R1, R2, R3) d'une main d'un utilisateur, et en détectant par la suite les données caractéristiques (A) provenant de la main de l'utilisateur et en vérifiant les données caractéristiques détectées par rapport auxdites données caractéristiques enregistrées, ledit système comprenant :
une unité de capture d'image (1) servant à capturer les images de la main dudit utilisateur ; et
une unité de stockage (4a) servant à stocker les données caractéristiques enregistrées (R1, R2, R3) de la main dudit utilisateur ; **caractérisé en ce qu'**il comprend en outre
une unité de traitement (3) servant à extraire des segments de silhouette (C1...C6) d'une image de la main capturée par ladite unité de capture d'image (1), les segments de silhouette étant obtenus à partir du contour limité de la paume de la main dans une plage de capture d'image (V) de ladite unité de capture d'image (1), et à juger, à partir desdits segments de silhouette extraits (C1...C6), si ladite image a été capturée avec succès, à extraire lesdites données caractéristiques de l'image si on juge qu'elle a été capturée avec succès, et à enregistrer lesdites données caractéristiques (R1, R2, R3) dans ladite unité de stockage (4a),
dans lequel ladite unité de traitement (3) permet d'obtenir une pluralité d'images de la main dudit utilisateur à partir de ladite unité de capture d'image (1), de juger le degré de ressemblance parmi les données caractéristiques entre chaque image de ladite pluralité d'images de la main, et d'enregistrer dans ladite unité de stockage (4a) une pluralité d'ensembles de données caractéristiques (R1, R2, R3) à un degré de ressemblance élevé à partir de la pluralité d'images ;
dans lequel ladite unité de capture d'image (1) permet de capturer une partie d'une main, dans la plage de capture d'image (V), comprenant la paume de la main dudit utilisateur et une partie des doigts, et dans lequel lesdites données caractéristiques (R1, R2, R3) sont des données issues de la paume de la main ; et dans lequel
ladite unité de traitement (3) permet de juger si ladite capture d'image a été réussie à partir du nombre de segments de silhouette d'une image de la paume de ladite main dans ladite plage de capture d'image (V).

2. Système d'authentification biométrique selon la revendication 1,
dans lequel ladite unité de traitement (3) permet de juger le degré de ressemblance des deuxième et troisième ensembles de données caractéristiques (R2, R3) de la main, en référence au premier ensemble de données caractéristiques (R1) de la main.

3. Système d'authentification biométrique selon la revendication 1 ou 2, dans lequel ladite unité de traitement (3) permet d'obtenir des images de la main dudit même utilisateur à partir de ladite unité de capture d'image (1), jusqu'à ce qu'un nombre prescrit d'ensembles de données caractéristiques (R1, R2, R3) à un degré de ressemblance élevé soient obtenus.

4. Système d'authentification biométrique selon l'une quelconque des revendications précédentes, dans lequel ladite unité de traitement (3), après l'enregistrement de ladite pluralité d'ensembles de données caractéristiques (R1, R2, R3) à un degré de ressemblance élevé dans ladite unité de stockage (4a), obtient à partir de ladite unité de capture d'image (1) une image de ladite paume, extrait lesdites données caractéristiques (A), vérifie lesdites données caractéristiques (A) par rapport à ladite pluralité d'ensembles de données caractéristiques (R1, R2, R3) enregistrés dans ladite unité de stockage (4a), et réalise ensuite une authentification d'essai de l'utilisateur.

5. Système d'authentification biométrique selon l'une quelconque des revendications précédentes, dans lequel ladite unité de traitement (3) réalise également une authentification individuelle en extrayant des segments de silhouette (C1...C6) d'une image d'une main d'un autre utilisateur capturée par ladite unité de capture d'image (1), en jugeant si ladite capture d'image a été réussie à partir desdits segments de silhouette extraits, en extrayant les données caractéristiques (A) de l'image si on juge qu'elle a été capturée avec succès, en vérifiant ces données caractéristiques (A) par rapport à ladite pluralité d'ensembles de données caractéristiques (R1, R2, R3) enregistrés dans ladite unité de stockage (4a), et en déterminant si l'autre utilisateur est la même personne que l'utilisateur.

6. Système d'authentification biométrique selon l'une quelconque des revendications précédentes, dans lequel ladite unité de traitement (3) juge le degré de ressemblance comme étant élevé lorsque ledit degré de ressemblance est supérieur ou égal à un seuil prescrit.

7. Système d'authentification biométrique selon l'une quelconque des revendications précédentes, dans lequel ladite unité de traitement (3) enregistre le premier ensemble de données caractéristiques biométriques (R1), et pour un n^{ème} ensemble de données caractéristiques biométriques, calcule tous les degrés de ressemblance du premier au (n-1)^{ème} ensemble de données caractéristiques biométriques, et lorsque tous les degrés de ressemblance sont supérieurs ou égaux à un seuil, enregistre ledit n^{ème} ensemble de données caractéristiques biométriques dans ladite unité de stockage (4a).

8. Système d'authentification biométrique selon la revendication 5,
dans lequel, au moment de l'authentification individuelle, ladite unité de traitement (3) lit ladite pluralité d'ensembles de données caractéristiques biométriques (R&, R2, R3) à partir de ladite unité de stockage (4a) selon des informations d'identification pour l'utilisateur, et vérifie lesdites données caractéristiques (A) obtenues à partir de l'image de la main obtenue par ladite unité de capture d'image (1) par rapport à ladite pluralité d'ensembles de données caractéristiques.

9. Système d'authentification biométrique selon la revendication 8,
dans lequel ladite unité de traitement (3) détecte le fait que lesdites données caractéristiques (A) extraites sont similaires à un ensemble de ladite pluralité d'ensembles de données caractéristiques enregistrés (R1, R2, R3), et authentifie ainsi l'autre utilisateur comme étant l'utilisateur.

10. Système d'authentification biométrique selon la revendication 1,
dans lequel ladite unité de traitement (3) juge si ladite capture d'image a été réussie à partir de la relation positionnelle des segments de silhouette (C1...C6) de l'image de la paume de ladite main par rapport au cadre de la plage de capture d'image (V) de ladite unité de capture d'image (1) et à partir du nombre desdits segments de silhouette dans ladite plage de capture d'image (V).

11. Système d'authentification biométrique selon l'une quelconque des revendications précédentes, dans lequel ladite unité de traitement (3), lorsqu'on juge que ladite capture d'image n'est pas réussie à partir des segments de silhouette (C1...C6) d'une image de la main, amène ladite unité de capture d'image (1) à réaliser à nouveau une capture d'image de la main, et obtient une nouvelle image de la main.

12. Système d'authentification biométrique selon la revendication 5, ou selon l'une quelconque des revendications 6 à 11 lorsqu'elles dépendent de la revendication 5, dans lequel ladite unité de capture d'image (1) comporte un capteur de distance (15) servant à mesurer la distance entre ladite unit de capture d'image (1) et la main,
et ladite unité de traitement (3) obtient l'image de la main à partir de ladite unité de capture d'image (1) lorsque la distance mesurée par ledit capteur de distance (15) se trouve dans une plage prescrite, et change ladite plage prescrite en fonction de si les images sont capturées pour un enregistrement ou pour une authentification individuelle d'un utilisateur.

13. Procédé d'enregistrement pour un système d'authentification biométrique à utiliser pour l'authentification d'un individu en détectant et en enregistrant les données caractéristiques (R1, R2, R3) d'une main d'un utilisateur en vue d'une utilisation future, et en détectant par la suite les données caractéristiques (A) provenant de la main de l'utilisateur et en vérifiant les données caractéristiques détectées par rapport auxdites données caractéristiques enregistrées, ledit procédé comprenant l'étape consistant à :
obtenir une image de la main de l'utilisateur à partir d'une unité de capture d'image (1) qui capture des images de la main ; **caractérisé en ce qu'**il comprend en outre
l'extraction de segments de silhouette (C1...C6) de l'image de la main, et le fait de juger, à partir desdits segments de silhouette, si ladite capture d'image a été réussie, les segments de silhouette étant obtenus à partir du contour limité de la paume de la main dans une plage de capture d'image (V) de ladite unité de capture d'image (1) ;
l'extraction des données caractéristiques (R1, R2, R3) d'une image de la paume dont la capture a été réussie ;
le fait de juger le degré de ressemblance parmi une pluralité d'ensembles de données caractéristiques (R1, R2, R3) extraits d'une pluralité desdites images de capture ; et
l'enregistrement d'une pluralité d'ensembles de données caractéristiques (R1, R2, R3) à un degré de ressemblance élevé dans une unité de stockage (4a) ;
dans lequel ladite étape d'obtention d'image comprend l'obtention, à partir de la plage de capture d'image (V) de ladite unité de capture d'image (1), d'une image capturée d'une partie de la main comprenant la paume de la main dudit utilisateur et une partie des doigts, et dans lequel lesdites données caractéristiques (R1, R2, R3) sont des données de la paume de la main ; et dans lequel
ladite étape consistant à juger la réussite de ladite capture d'image comprend le fait de juger si ladite capture d'image a été réussie à partir du nombre de segments de silhouette (C1...C6) de l'image de la paume de ladite main dans ladite plage de capture d'image (V).

14. Procédé d'enregistrement pour un système d'authentification biométrique selon la revendication 13, dans lequel ladite étape consistant à juger le degré de ressemblance comprend le jugement du degré de ressemblance des deuxième et troisième ensembles de données caractéristiques (R2, R3) de la main en référence à l'ensemble de données caractéristiques initial (R1) de la main.

15. Procédé d'enregistrement pour un système d'authentification biométrique selon la revendication 13 ou 14, comprenant en outre une étape consistant à obtenir des images de la main du même utilisateur à partir de ladite unité de capture d'image (1), jusqu'à ce qu'un nombre prescrit desdits ensembles de données caractéristiques (R1, R2, R3) à un degré de ressemblance élevé soient obtenus.

16. Procédé d'enregistrement pour un système d'authentification biométrique selon l'une quelconque des revendications 13 à 15, comprenant en outre les étapes consistant à :
obtenir une image de la main à partir de ladite unité de capture d'image (1), après l'enregistrement d'une pluralité desdits ensembles de données caractéristiques (R1, R2, R3) à un degré de ressemblance élevé dans ladite unité de stockage (4a) ;
extraire des segments de silhouette (C1...C6) de l'image de la main et juger à partir desdits segments de silhouette si ladite capture d'image a été réussie ;
extraire les données caractéristiques (A) de l'image de la main dont la capture a été réussie ; et
vérifier lesdites données caractéristiques (A) par rapport à la pluralité d'ensembles de données caractéristiques (R1, R2, R3) enregistrés dans ladite unité de stockage (4a),

17. Procédé d'enregistrement pour un système d'authentification biométrique selon l'une quelconque des revendications 13 à 16, dans lequel ladite étape consistant à juger le degré de ressemblance comprend le fait de juger le degré de ressemblance comme étant élevé lorsque ledit degré de ressemblance est supérieur ou égal à un seuil prescrit.

18. Procédé d'enregistrement pour un système d'authentification biométrique selon l'une quelconque des revendications 13 à 17, dans lequel ladite étape de jugement du degré de ressemblance comprend :
une étape consistant à calculer, pour un n^{ème} ensemble de données caractéristiques biométriques, les degrés de ressemblance du premier au (n-1)^{ème} ensemble de données caractéristiques biométriques ; et
une étape consistant à juger ledit n^{ème} ensemble de données caractéristiques biométriques comme étant des données caractéristiques appropriées pour l'enregistrement lorsque tous les degrés de ressemblance sont supérieurs ou égaux à un seuil.

19. Procédé d'enregistrement pour un système d'authentification biométrique selon l'une quelconque des revendications 13 à 18, dans lequel ladite étape consistant à juger la réussite de ladite capture d'image comprend le fait de juger si ladite capture d'image a été réussie à partir de la relation positionnelle entre les segments de silhouette (C1...C6) de l'image de la main et le cadre de la plage de capture d'image (V) de ladite unité de capture d'image (1), et à partir du nombre desdits segments de silhouette dans ladite plage de capture d'image (V).

20. Procédé d'enregistrement pour un système d'authentification biométrique selon l'une quelconque des revendications 13 à 19, comprenant en outre une étape consistant à amener ladite unité de capture d'image (1) à capturer à nouveau une image de la main, lorsque ladite étape de jugement juge que ladite capture d'image n'est pas réussie à partir des segments de silhouette (C1...C6) de l'image de ladite main.

21. Procédé d'enregistrement pour un système d'authentification biométrique selon l'une quelconque des revendications 13 à 20, dans lequel ladite étape d'obtention d'image comprend une étape consistant à obtenir une image de la main à partir de ladite unité de capture d'image (1) lorsque la distance mesurée par un capteur de distance (15) qui mesure la distance entre ladite unité de capture d'image et la main se trouve dans une plage prescrite.

22. Code de programme contenant un programme qui, lorsqu'il est exécuté par un ordinateur, amène l'ordinateur à réaliser le procédé selon l'une quelconque des revendications 13 à 21.
